# EUROPEAN PATENT APPLICATION

(11) **EP 1 926 028 A1**
(43) Date of publication of application: **28.05.2008**
(21) Application number: 06124741.7
(22) Date of filing: 24.11.2006
(51) Int. Cl.: G06F 17/30

(54) **Computer program for website analytics**

(71) Applicant: Nedstat B.V., 1112 XC Diemen (NL)
(72) Inventor: Berger, Michiel, 1817 EB, Alkmaar (NL)
(74) Representative: van Looijengoed, Ferry Antoin Theodorus

(57) **Abstract**

The invention relates to a computer program and method for displaying statistical data of a website. A statistical data item is retrieved for hyperlinks of which source anchors are shown on a page of a website about the activation of these hyperlinks. The statistical data is displayed as a circular shape of which the area represents respective values of said statistical data item.

## Description

### FIELD OF THE INVENTION

The invention relates to a computer program for displaying statistical data of a website. In particular, the invention relates to a computer program according to the preamble of claim 1, a computer system according to the preamble of claim 6, a method according to the preamble of claim 7 and a web page according to the preamble of claim 8.

### BACKGROUND

In the field of website analytics (also named "webanalytics"), it is known to collect and report statistical data about the usage of web sites by visitors. Such statistical data may comprise of, for example, information on the number of clicks on the anchor of a specific hyperlink, the number of different visitors, or e-commerce transaction volumes. The reported statistical data is commonly used as information for marketing activities. As an example of a marketing activity on the basis of statistical data, a website may be restructured in order to direct attention of a website visitor to an advertisement on the website. The latter may be realised by placing that advertisement near the anchor of a hyperlink that is being clicked relatively often.

In the known type of computer program mentioned above, the above-mentioned statistical data is reported by creating an overlay over the original web page about which is to be reported, i.e., a projection of statistical data regarding items on the webpage is projected near the respective items. In some of such programs, the statistical data items are shown as numbers in the vicinity of the anchors of hyperlinks. In other such programs, the statistical data items are shown as bars of which the length indicates the value of a statistical data item. The overlay in such programs is meant to provide a quick overview over the statistical information on a web page, in particular over the relative values of a statistical data item for various hyperlinks on a web page.

In practice, it requires significant time and/or mental effort to obtain such an overview. For numbers near the anchors of hyperlinks, this effort will be obvious to the reader, but it appears that bars near the anchors of hyperlinks also require significant effort.

### SUMMARY OF THE INVENTION

The invention seeks to reduce or eliminate the above-mentioned disadvantage.

This object is realised by the computer program according to claim 1.

By value, we refer to a numerical value, and also an ordinal value, i.e., any value that can be subjected to an ordering.

According to the invention, the area of an essentially circular shape visualises a value of a statistical data item regarding the activation (also: clicking the anchors) of hyperlinks. Thus, for comparing the respective values of a statistical property of at least two hyperlinks, one needs to compare the respective values of the area. Since, for an essentially circular shape, area and equivalent radius are related one-to-one, one may also compare equivalent radiuses. Here, the equivalent radius of an essentially circular shape is the radius of a circle that has the same area as the essentially circular shape.

Essentially circular shapes have the beneficial property that they provide an immediate impression of their mutually relative sizes, at least partially because they have no distracting geometrical properties. This in contrast to, for example a bar, being a shape that requires some effort before the relevant geometrical property, its length, is distinguished and interpreted. The advantage of convenience in comparing becomes larger when more than only two hyperlinks are being compared.

An additional advantage of circular shapes is that they do, in general, not interfere with the content of web pages, since most pages contain predominantly texts and other information that does not have the shape of circles. Therefore, circles can be distinguished easily from the content of the web page.

Moreover, due to their well-perceivable center, one may easily identify which particular circle corresponds to a statistical data item on a web page.

As a result, the invention creates the possibility to obtain a quick overview of the relative values of statistical data on a web page.

Essentially circular shapes include, but are not limited to circles, ovals, polygonal shapes having six or more edges, and three-dimensional shapes, as long as the latter are visible to the viewer as comprising a shape that is essentially circular (such as, for instance, a sphere does when shown in perspective).

An advantageous embodiment of the invention is defined in claim 2. The division as defined offers the advantage that the size of the circular shapes on all web pages shown is scaled to the same range of sizes, i.e., the range of sizes is normalised. This allows for a particularly quick overview of the relative values of the statistical data items on the web page.

The proportionality may be a linear relationship, but also otherwise, such as for example squared, cubed, or logarithmic.

The embodiment according to claim 3 has the advantage of allowing for grouping of the values of the area into a few classes, instead of varying the area on a continuous scale. Such a grouping allows one to focus on the major statistical differences with less effort.

In the embodiment according to claim 4, an additional visible property, e.g., colour, of the essentially circular shape is used, next to the area. Colour has proven to be a property that is also easily grasped as an indication of a value by human beings. The same holds for colour intensity. Other examples of visible properties include but are not limited to a darkness of the inside of the essentially circular shape, and the pitch or thickness of parallel lines filling the circular shape. It appears that the area of a circle in combination with an additional visible property, as representations of two statistical values, may be interpreted with remarkably little effort.

Another advantageous embodiment is defined in claim 5. In this embodiment, the background containing the original web page is clearly distinguished from the essentially circular shapes that represent the statistical information. As such, the impact of the statistical information is enhanced, and, as a result, it becomes possible to grasp the statistical information even more quickly. In one variant of the embodiment according to claim 5, the background is lighter, in another variant the background is darker. In yet another variant, in addition to changing the colour of the background, the contrast of the background is also reduced.

The goal of the invention is also realised by a computer system according to claims 6, 7 and 8. Such a computer system, method and web page have the advantages described above.

### SHORT DESCRIPTION OF THE DRAWINGS

The invention will now be described in more detail on the basis of the accompanying drawings, in which:
Fig. 1 shows a computer system according to an embodiment of the invention;
Fig. 2 shows a schematic representation of data displayed according to an embodiment of the invention; and
Fig. 3 shows another schematic representation of data displayed according to an embodiment of the invention.

### DETAILED DESCRIPTION OF THE DRAWINGS

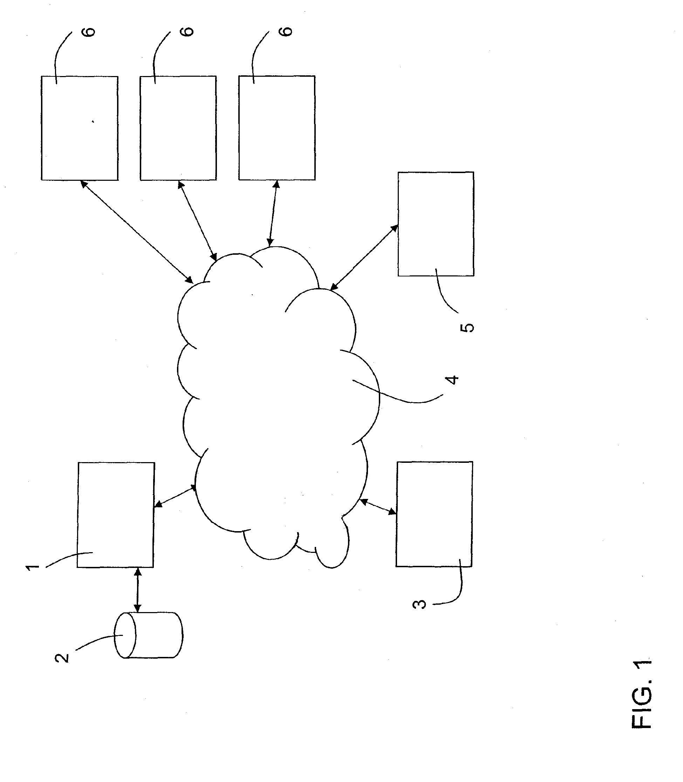

Figure 1 shows a computer system according to the invention, comprising a statistics server 1 connected to a database system 2, a customer's web server 3, and a communication network 4, connecting both servers to each other. A computer program with computer readable instructions according to an embodiment of the invention is running on statistics server 1. The statistics server 1 may be a server of the provider of website analytics.

Furthermore, the computer system of Fig. 1 shows a customer's computer 5 and various visitor's computers 6, which are also connected to the communication network 4.

The operation of the computer system is as follows. The customer's web server 3 is visited by users thereof, via visitor's computers 6 and the communication network 4. On the customer's web server, program code is integrated with the web site code such that statistical data is collected, for instance each time the web site is visited and each time an anchor of a hyperlink is clicked, etc. Such statistical data identifies the respective web page or hyperlink, e.g., by an URL (Uniform Resource Locator), and may be accompanied by data usable for identifying the visitor and other information, such as which browser type is used, or information about the turnover generated via following the respective hyperlink. Then, the collected statistical data is sent to the statistics server 1, which accumulates the statistical data obtained from all visitor's computers and stores that data in database system 2.

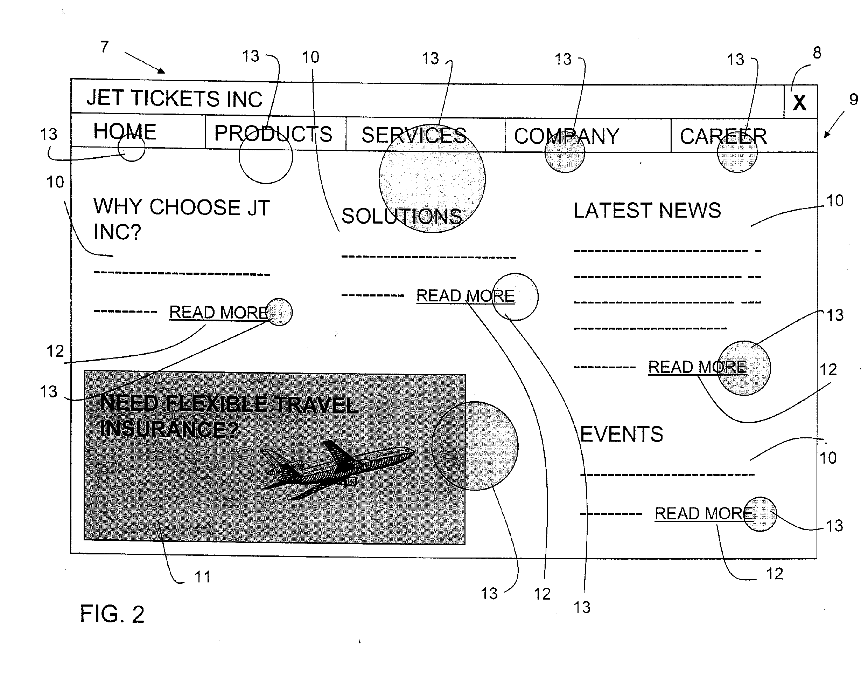

Next, an authorised person may logon at the statistics server 1 and retrieve the statistical data for a given customer. In this example, the person is the customer, at the customer's computer 5. Of course, the person may be someone else that is authorized to access (part of) the statistical data of the statistics server 1, and may be using a different computer. When the customer logs on at the statistics server 1, the computer program with computer-readable instructions according to an embodiment of the invention is started. The program retrieves a page of the customer's website from that website and displays the page on a visual display, retrieves statistical data about the hyperlinks on the page from the database system 2, and displays the statistical data, or data derived thereof, on the website page. This results in the report page 7 of Figure 2.

The report page 7 contains an exit button 8, a menu bar 9, information items 10, an advertisement 11, anchors 12 of hyperlinks and geometrical shapes 13. The items on the menu bar are also anchors of hyperlinks, although they are, for the sake of clarity, not indicated by a reference number.

The statistical data is displayed according to an embodiment of the invention, i.e., a data item is shown near each of at least two anchors 12 of hyperlinks on the page, and the data items are shown as geometrical shapes, viz. as circles 13, having a geometrical feature, viz. an area, that corresponds to the number of times a hyperlink was clicked upon in a given time period. In fact, the area of the circle for a hyperlink is determined as the product of a maximum allowed area (or area) times the number of clicks on the anchor of that hyperlink divided by the total number of clicks on all the anchors 12 of hyperlinks on the web page. This yields a normalised range of areas, allowing a viewer to obtain a quick overview of the relative link popularity values.

The circles 13 are semi-transparent, as a result of which the original webpage remains essentially visible, thus enabling one to relate the statistical information easily to the web page information. By looking at Figure 2, it becomes immediately clear that the 'services' hyperlink is activated more often than other hyperlinks on the page.

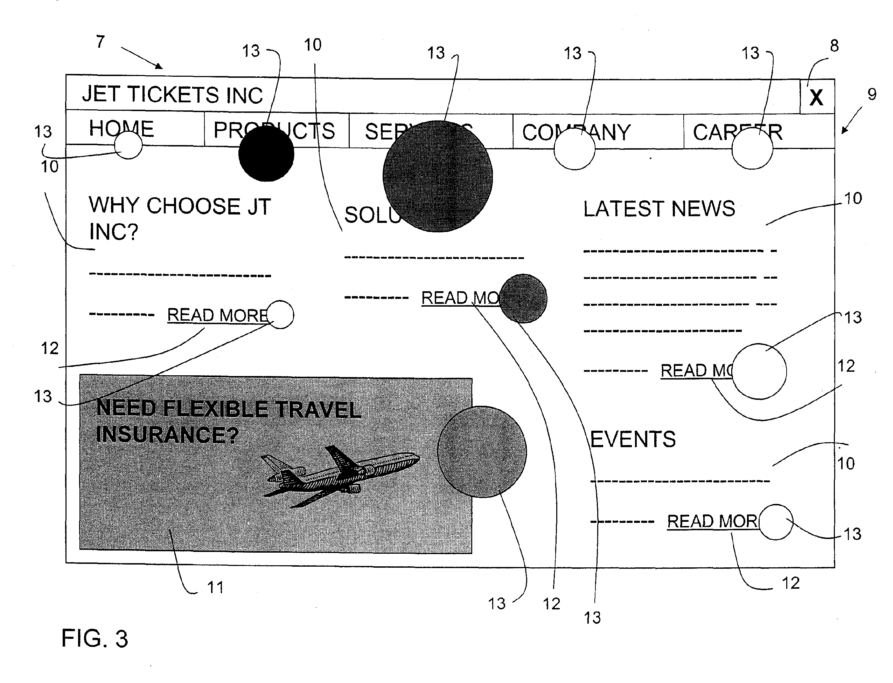

Figure 3 shows the same web site page as shown in Figure 2, including a different overlay with statistical data. Moreover, the web page itself is covered with a layer of grey (a semi-transparent shield), reducing the contrast and thus reducing the visual impact of the web page. As a result, the statistical data is more clearly distinguished from the web page.

In Figure 3, statistical data is displayed as a circle of which the area represents the value of a statistical data item and the darkness represents the value of another statistical data item. The area represents the number of clicks on the anchor of a hyperlink in a given time period, and the darkness represents the turnover generated by the clicks on the anchor of that hyperlink (the darker, the more clicks). For example, it is visible that the 'products' hyperlink is visited less frequently, than the 'services' hyperlink, but generates a higher turnover.

The shown examples are given only for illustrative purposes, and are not to be taken as limitative. For instance, the computer program according to the invention need not be installed on a statistics server connected to the customer's web server via a communication network; instead, the computer program may be located on the customer's web server computer. Moreover, instead of the internet serving as communication network, other networks may have this role, e.g., Local Area Networks or Wide Area Networks. Also, only a subset of the hyperlinks on a page may be provided with statistical data items. Finally, the normalised circle areas may depend on a different statistical variable than the hyperlink popularity, such as the dwell time on the page reached by activating the respective hyperlink. Various other modifications are possible, without leaving the scope of the invention, as defined in the following claims.

## Claims

1. Computer program for displaying statistical data of a website, comprising computer-readable instructions for performing the tasks of:
- retrieving for each of two or more hyperlinks of which the anchors are shown on a page of a website a statistical data item about activation of the respective hyperlink,
- displaying on a visual display at least part of said page of said website,
- displaying, for each respective one of said two or more hyperlinks, on or in the vicinity of the source anchor of that hyperlink on said visual display said item of said statistical data that relates to that hyperlink,
**characterised in that**
said computer-readable instructions are adapted for displaying said item of said statistical data as an essentially circular shape (13) of which the area represents a value of said statistical data item.

2. Computer program according to claim 1, wherein said area is proportional to the value of said statistical data item divided by the total sum of the values of said statistical data item over each of the at least two hyperlinks of the displayed part of said web page.

3. Computer program according to claim 1 or 2, wherein said area is stepwise proportional to the value of said statistical data item divided by the total sum of the values of said statistical data item over each of the at least two hyperlinks of the displayed part of said web page.

4. Computer program according to one of the preceding claims, wherein, for each of said at least two hyperlinks, at least one statistical data item is retrieved and displayed as at least one visible property other than the area of said essentially circular shape.

5. Computer program according to one of the preceding claims, wherein said visual display comprises a semi-transparent shield provided over said page that reduces the visual impact of said at least part of said page, and wherein said essentially circular shapes are shown as if they are in front of said semi-transparent shield.

6. Computer system for displaying statistical data of a website, comprising
visual display means adapted for visually displaying information to a person,
data storage means adapted for storing data,
data processing means adapted for executing computer-readable instructions obtained from said data storage means and for displaying data from said data storage means on said visual display means,
in which said data storage means contain computer-readable instructions comprising the program of one of claims 1-5.

7. Method for displaying statistical data of a website on a visual display, comprising the steps of:
- retrieving for each of two or more hyperlinks of which the anchors are shown on a page of a website a statistical data item about activation of the respective hyperlink,
- displaying on said visual display at least part of said page of said website,
- displaying, for each of said two or more hyperlinks, on or in the vicinity of the source anchor of that hyperlink on said visual display said item of said statistical data that relates to that hyperlink,
**characterised in that**
said method further comprises the step of displaying said item of said statistical data as an essentially circular shape (13) of which the area represents the value of said statistical data item.

8. A web page comprising a plurality of hyperlinks, wherein, for each respective one of at least two of said hyperlinks, on or in the vicinity of the source anchor of that hyperlink a statistical data item relating to the activation of that hyperlink is displayed as an essentially circular shape(13) of which the area represents the value of said statistical data item.
